# EUROPEAN PATENT SPECIFICATION

(11) **EP 2 523 423 B1**
(45) Date of publication and mention of the grant of the patent: **02.01.2019**
(21) Application number: 12167571.4
(22) Date of filing: 10.05.2012
(51) Int. Cl.: H04L 29/08

(54) **METHOD AND SYSTEM FOR PROVIDING A DISTRIBUTED SCALABLE HOSTING ENVIRONMENT FOR WEB SERVICES**
VERFAHREN UND SYSTEM ZUR BEREITSTELLUNG EINER VERTEILTEN, SKALIERBAREN HOST-UMGEBUNG FÜR WEBDIENSTE
PROCÉDÉ ET SYSTÈME POUR FOURNIR UN ENVIRONNEMENT D'HÉBERGEMENT EXTENSIBLE ET RÉPARTI POUR DES SERVICES WEB

(30) Priority: 10.05.2011 EP 11165469
(43) Date of publication of application: 14.11.2012
(73) Proprietor: Deutsche Telekom AG, 53113 Bonn (DE)
(72) Inventor: Offermann, Philipp, 10717 Berlin (DE); Kreutzberger, Sebastian, 39104 Magdeburg (DE); Döring, Uwe, 10557 Berlin (DE)
(74) Representative: Vossius & Partner Patentanwälte Rechtsanwälte mbB

(56) References cited:
- WO-A2-03/069437
- US-A1- 2010 228 819

## Description

### Technical Field

The present invention relates to a method and system to provide a hosting environment for web services, in particular, to host web applications in a scalable and distributed manner in different geographic locations.

### Background of the invention

Nowadays the desktop applications are more and more replaced by web applications. While for desktop applications software has to be installed on the client computer, the web applications only require an Internet or intranet connection and a web browser to be installed on the client computer. The web application itself is served from the Internet when accessing the application. In contrast to static web sites, web applications are dynamic and offer a more interactive user interface leveraging the browser's computation capabilities, e.g. JavaScript and background communication, e.g. using the XMLHttpRequest, XHR, function. In the same way, smartphone applications often access services on the Internet to provide up-to-date information, data storage, communication or any other functionality that requires Internet access.

Static web sites consist mainly of HyperText Markup Language, i.e. HTML, files and images. The content of the static web sites is identical for all site users and does not change frequently. In contrast, web applications are often user specific and change frequently due to current events. This is achieved by dynamically assembling content, e.g. as HTML files, on the server side and delivery of individual assemblies to different users. Mostly, this is achieved by using a database, e.g. MySQL, MongoDB, Redis, and a server-side program written in a programming language such as PHP, Python, Ruby. The database is accessed by the server-side program to gather the information necessary to assemble an individual page in a web application as well as to write user input to the database.

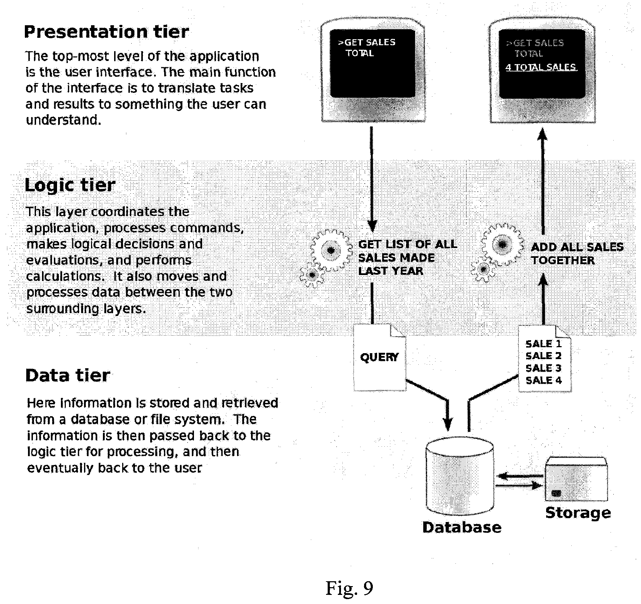

To deliver dynamic web content, commonly a three-tier architecture is used (cf. Fig. 9). The presentation tier is responsible for serving static content and potentially some cached dynamic content. The content is rendered by the user's browser. It may be static or generated dynamically. The logic tier is responsible for dynamic content processing and generation, using some server-side programming environment (e.g. PHP, Python, Ruby). It delivers its output to the presentation tier. The data tier is the back-end database, comprising database content and a database management system. The data tier is accessed by the logic tier for data retrieval and storage.

When users access a web page, the page has to be served from the server and transmitted to the client. The time it takes from a client request until the complete delivery depends on the speed of the server and the network path from the server to the client. Depending on the server and the specific network path, this can amount to a significant delay.

In order to accelerate the delivery of the web pages, content delivery networks, CDN, place caching servers at network edges. The web sites are then built in a way that the static content is served from a special domain managed by the CDN. When a client requests a resource from that domain, the fully qualified domain name, FQDN, may be resolved to an Internet Protocol, IP, address. This is done by a domain name system, DNS, server. The CDN uses global server load balancing, GSLB, for the DNS server to serve the IP of an edge server near to the client. The client then accesses the edge server to retrieve the content. The edge server either serves the content from its cache, or if the resource is not in cache or expired retrieves the resource from the central server, stores it in cache and serves the resource to the client.

Distributing caching edge servers only works for static content that can be cached. For web applications and (smartphone) applications requiring Internet access, more and more parts are user specific and cannot be cached. The application delivery network, ADN, combines the CDN caching capabilities with managed paths through the Internet. Parts of a web application that can be cached are delivered using a regular CDN network. Parts that are dynamic and cannot be cached are routed between the edge server and the web server over a managed network path, reducing the number of hops and total delay.

When trying to serve not only static content, but also dynamic content from edge servers, the application code and data have to be copied to the edge server. While it is easy to copy the application code, i.e. simply by setting up the same application server and copying the code files, copying the dynamic content is more difficult as the data is not only read but also changed.

WO 02/44915 A1 describes a system and method to distribute application logic and replicated data to edge caches. Client request are then routed to an edge cache using GSLB. Different methods for routing database requests are described for master-slave systems and eventually consistent data synchronization.

US 2010/0185455 A1 describes a method and system to distribute third-party web contents to edge servers and serves client request from the nearest edge server.
US 2010/0228819 A1 also describes a method and system to distribute application to edge servers and routing clients to an edge server based on traffic management. The distribution of the application might be in the form of a virtual machine image.

US 6,976,090 B2 describes a system to distribute web content from an origin server to edge servers, using a service policy to derive a version of the web content for an edge server. The service policy may include regional and temporal preferences, client identity and content priority.

US 2010/0223378 A1 describes a system and method for auto-scaling a globally distributed hosting infrastructure. Load-balancing and auto-scaling is based on performance metrics and traffic measurements.

WO 99/40514 A1 describes a method and system to intercept a request to an origin server and reflect it to a repeater. Thereby, the patent describes the functioning of content delivery networks.

US-A-2002/0065899 describes an edge-deployed database proxy method. The method separates database requests and databases on edge servers. Thereby, the method can provide edge server load balancing and caching for database requests.

US-A-2010/274819 describes the dynamic content assembly on edge-of-network servers in a content delivery network, in particular, a method and system to describe and assemble web page fragments dynamically at CDN edge servers. The language used to describe the fragments and the assembly process is called "edge side include", ESI. A web application needs to be written using ESI in order to use the method and system. A similar approach is described in US-A-2010/198916 in which a framework that serves base HTML documents from a central server and embeds additional objects at hosting servers.

US-A-2010/312809 describes a method and system for geographic co-location service for cloud computing. Affinity groups comprised of a hosted service and/or data are assigned to geographical regions. However, it does not concern with a technical solution to geographically distribute web applications and handling database requests.

US-A-2010/185455 describes a method and system to dynamically add hosts to a web hosting environment. It further describes that the web content can be distributed in real-time among the plurality of computer systems. Upon receiving a Uniform Resource Locator, URL, request from a client system, the URL request is directed to one or more of the plurality of computer systems that are in geographic close proximity to the client system and contain the requested web contents. The one or more of the plurality of computer systems then transmit the requested web contents to the client system.

CN-A-101635728 describes a method to improve the performance of data synchronization in a content delivery network. It relieves the burden of the synchronization processing manager and equalizes the pressure of the system, thereby improving the performance of the system.

### Summary of invention

The present invention discloses a system and method to host dynamic web applications in a geographically distributed way. A web application usually is a program hosted on a web application server, and it includes application data and application logic referred to certain data, e.g. stored on a database server. When the user accesses or requests a web application, the application server sends an inquiry to the database sever and receives the reply from the database server. In comparison with the static data such as the HTML files or PHP code, the reply by the database server is dynamic. Therefore, providing dynamic web applications is in a broader term the same as providing web services. The code of the web application such as PHP, Java, Python, Ruby is stored in a repository server and retrieved from that server. The database structure and possible database content are uploaded to a master database server such as MySQL, Postgres or MongoDB. The web application and the database are distributed to geographically distributed regions, e.g. in North America, Europe, Asia, Australia. The distributed server infrastructure is set up in a way that it can process the web application code, e.g. PHP server, and serve the database content, e.g. MySQL server. The database servers are set up in a way that there is at least one master database server in each region. The database servers of each region replicate their data in an eventually consistent manner. Within each region, there are a variable number of database servers, which are preferably strongly consistent with each other. In order to differentiate the database servers, hereinafter they are referred to as edge or local database server and replicated database server. The database load balancer within each region is accessible through the same domain name within each region; all application servers are configured to resolve the domain name to their local database load balancer. Application servers and database servers in each region can be dynamically started and stopped, depending on current utilization. The DNS name resolution for domain names referencing a web application is set up to return the IP address of an application load balancer nearest to the end user using Global Server Load Balancing, GSLB.

In order to avoid the drawbacks in the prior art and to enable that the web services being hosted in a distributed and scalable manner, the present invention discloses a method according to independent claim 1.

According to another aspect, the present invention discloses a system for providing a web service according to independent claim 9.

The load balancer preferably comprises a database load balancer and an application load balancer, each handling different requests of a web service. The request may comprise application data request in HTTP or HTTPS which is redirected by the application load balancer, and database request in TCP which is redirected by the database load balancer.

Preferably, one of the edge networks for providing the web service will be determined, based on the geographical distances or network condition such as bandwidth or latency between the user and the edge networks. Also other criterions such as CPU load, network load or number of requests of the web service in a certain region may be considered. The determination task may be done by a global gateway which monitors the above parameters. This gateway may be integrated into the system according to the present invention or provided by an external system, After the suitable edge network being determined, the request of the web service may be redirected to the database load balancer of the determined edge network.

Preferably, a DNS server resolves the IP address of the application load balancer and the database load balancer of the determined edge network. The DNS lookup may be a service of the system according to the present invention or provided by an external system. Moreover, the access to one of the edge database servers by the database load balancer may be also carried out using a database name space unification mechanism aided by a region aware DNS resolution which happens on the application server in order that the application server finds the database load balancer which belongs to the same edge network. The database name space unification mechanism is a function of the database server and not the database load balancer. The latter merely distributes the accesses equally to the database servers.

Preferably, the plurality of the application servers and/or the edge database servers is running on virtual machines. Moreover, the information including IP address of the added or removed application and/or edge database servers is sent to a management server.

Preferably, the edge database servers within each edge network are kept in sync. More preferably, each edge network has one or more replicated database servers, and the replicated database servers within the each edge network are also kept in sync. The replication of the replicated database server may be either a master-master or a master-slave replication.

Preferably, the edge database servers and/or the replicated database servers across the entire edge networks are also kept in sync with each other.

### Preferred advantages of the invention

The CDN in the prior art only distributes the static content to the edge server, thereby increasing the delivery performance only for static content. According to the present invention, the web application including the application code, i.e. static content and the dynamic data content is moved to the network edge, thereby accelerating the delivery of the static and the dynamic content of the web application.

In the prior art, only the static content is served from the edge servers. According to the present invention, the requests for dynamic and private information can be served directly from the edge servers.

In prior art, database writes for hosting on edge serves always have to be routed to a central database server. According to the present invention, database requests of any kind are handled by a local database instance. The local database instance means here the edge database server in the same region.

In prior art, methods and systems to serve web applications from edge servers did not offer automatic scalability. The present invention automatically scales up and down used resources in the edge server location, adapting resource usage to demand varying in location and time.

The method and system according to the present invention can be offered either as an add-on to the existing hosting services, e.g. as an extension to the existing CDN services, or as a stand-alone service.

The present invention provides a method and system with improved design architecture for hosting the web application having dynamic contents. In particular, not only delivery of the static content is accelerated through caching of the static content on the edge web server distributed geographically close to the user, but also the delivery of the dynamic content of the web application is accelerated using the replica of the database when the user is located next to the distributed web server. In other word, the dynamic content of the web application will be provided to the user by one of the web servers located nearby the user. In addition, the application scales to the current demand by adding and removing application and database servers as required by the current load on the systems.

### Brief description of figures

The present invention will be described hereinafter in more detail with the accompanied figures.
Fig. 1 shows how the components of the system are set up;
Fig. 2 shows how the components of the system interact to answer an end user request;
Fig. 3 shows how the virtual application server clusters can be set up;
Fig. 4a shows how databases are replicated between different regions;
Fig. 4b shows how MySQL and MongoDB replication could be set up;
Fig. 5a shows how a MySQL cluster can be set up on Amazon Web Services;
Fig. 5b shows how a MongoDB cluster can be set up on Amazon Web Services;
Fig. 6 shows the method to set up an application on the system;
Fig. 7 shows the method to deploy an application that is set up on the system;
Fig. 8 shows the method how an end user request is served by the system;
Fig. 9 shows a typical three-tier architecture for hosting a web application.

### Detailed description of invention

The invention discloses a system and method to host dynamic web applications in a geographically distributed way. The code of the web application such as PHP, Java, Python, Ruby is stored in a repository server and retrieved from that server. The database structure and possible database content are uploaded to a master database server such as MySQL, Postgres or MongoDB. The web application and the database are distributed to geographically distributed regions, e.g. in North America, Europe, Asia, Australia. The distributed server infrastructure is set up in a way that it can process the web application code, e.g. PHP server, and serve the database content, e.g. MySQL server. The database servers are set up in a way that there is at least one master database server in each region. The master database servers of each region replicate their data in an eventually consistent manner. Within each region, there are a variable number of slave and/or master database servers, which are strongly consistent with the local master database server. The database load balancer within each region is accessible through the same domain name within each region; all application servers are configured to resolve the domain name to their local database load balancer. The DNS name resolution for domain names referencing a web application is set up to return the IP address of an application load balancer nearest to the end user using Global Server Load Balancing, GSLB.

In a preferred embodiment, the web application might be installed only in one or a few regions in the beginning. It can then be measured where end user requests come from. If the number of requests surpasses a certain limit for a region where the web application is not currently installed, the application is automatically installed in that region, by setting up the region's infrastructure as explained below and reconfiguring the GSLB. Also, if requests to a web application in a specific region fall below a certain limit, the web application might be removed from that region. In that case the region's infrastructure for that web application is shut down, the data replication set-up is adapted and the GSLB reconfigured.

In addition to the replicated databases, the system might also provide a distributed file system. If selected, a distributed file system is set up for a web application. All files in that file system are distributed to other regions. The web application can access the file system in each region. Whenever a file is written, changed or deleted in one region, changes are replicated to the other regions. Also, the system might provide an in-memory database like Memcached or Redis, locally or distributed as described for the on-disk databases.

In a preferred embodiment, the database servers might be set up as in a master-slave configuration, where there is a master database server in one region and slave database servers in all other regions. In that case, all requests creating, updating or deleting data have to be routed to the master database server, while reading requests can be served from the local slave database server.

In order to create billing data, different metrics can be measured for each web application according to virtual application server and database utilization. Possible metrics are: Number and runtime of virtual application servers, network input/output at the application load balancer, number of byte stored in a database, network input/output for web application at database load balancer, number of regions a web application is distributed to.

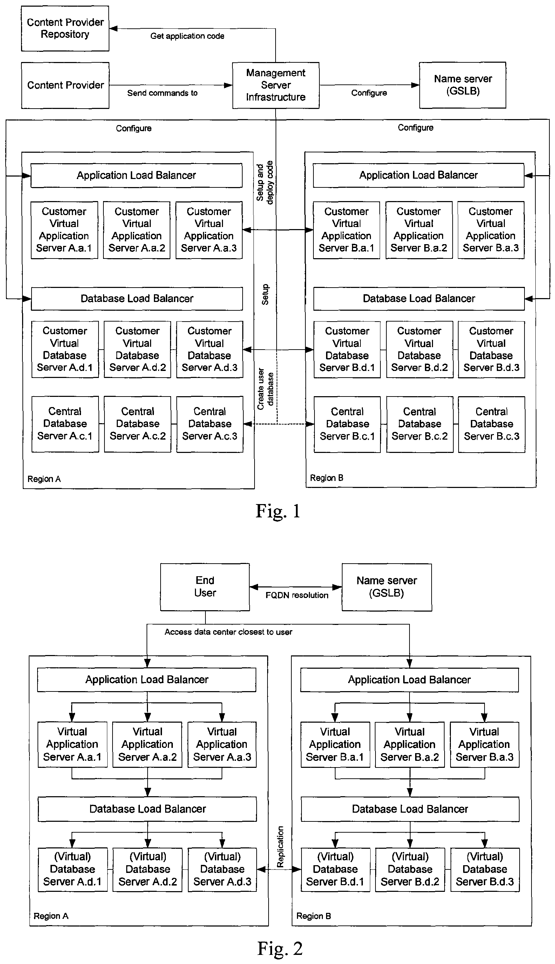

Fig. 1 shows exemplarily a system with the following components: a management server infrastructure, a GSLB name server, a content provider repository and two exemplary regions each containing an application load balancer for a specific web application, a number of customer virtual application servers for the web application, on exemplary database load balancer, a number of customer virtual database servers for the web application and a number of central database servers.

To deploy a web application on the distributed infrastructure, the content provider sends a request to the management server infrastructure. The management server infrastructure sets up the required virtual application servers and virtual database servers for that web application in each region and application and database load balancers as required. It then retrieves the web application code from the content provider repository (or alternatively from a repository belonging to the infrastructure provider) and deploys it on the customer virtual applications. Additionally, it creates the required user databases on the customer virtual database servers and on the central database servers. Finally, it configures the name server to direct customer requests to the appropriate application load balancer that has been set up in each region.

In case the web application code is changed in the repository, the web application can be redeployed in a similar manner as the original deployment process. The code is pulled from the repository and distributed to the virtual application servers. Alternatively, the redeployment process can be started by using a hook in the repository that automatically triggers the redeployment process whenever a certain branch in the repository is updated.

Fig. 2 shows an example how the system components interact to serve an end user request. First, the end user requests a FQDN resolution from the name server. The name server sends back the IP address of the web application's application load balancer of the preferred region, e.g. nearest region. The end user then sends a request for a web page to that application load balancer. The application load balancer distributes the HTTP request to a virtual application server using some distribution algorithm, possibly using sticky sessions. The virtual application server executes the application logic according to the request. Database requests are sent to a database load balancer of the same region, depending on the database type. The virtual application servers are configured to resolve a defined domain name for each database type to the local database load balancer of the same region. The database load balancer distributes the database request to a (possibly virtual) database server, using some distribution algorithm.

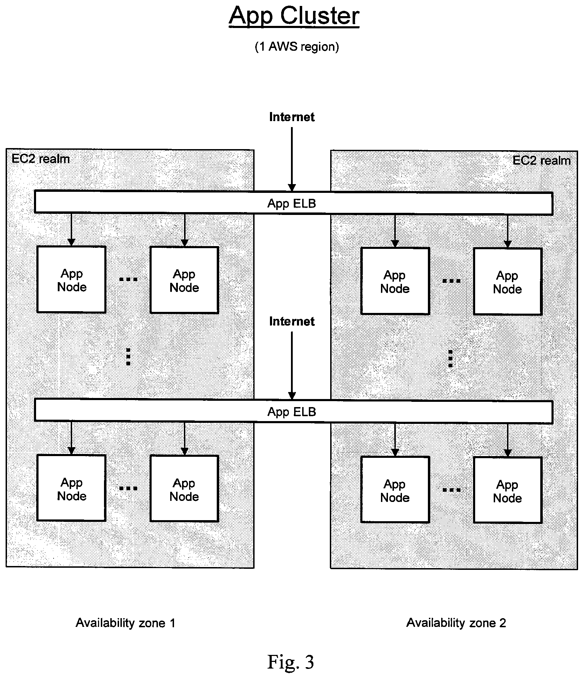

Fig. 3 shows an example how the virtual application servers are set up on Amazon Web Services in two availability zones. Each web application has its own application load balancer and set of virtual application servers. Within each region, the number of virtual application servers can be scaled up and down according to the current load. If the load of the virtual application servers exceeds a certain limit (e.g. CPU load, memory utilisation, disk utilisation), the virtual application servers are created and registered with the application load balancer. Once the load of the virtual application servers falls below a certain limit, virtual application servers can be shut down. By using at least two availability zones, the likelihood of a region's failure is reduced. If one availability zone fails for some reason, the application can still be served from the other availability zone.

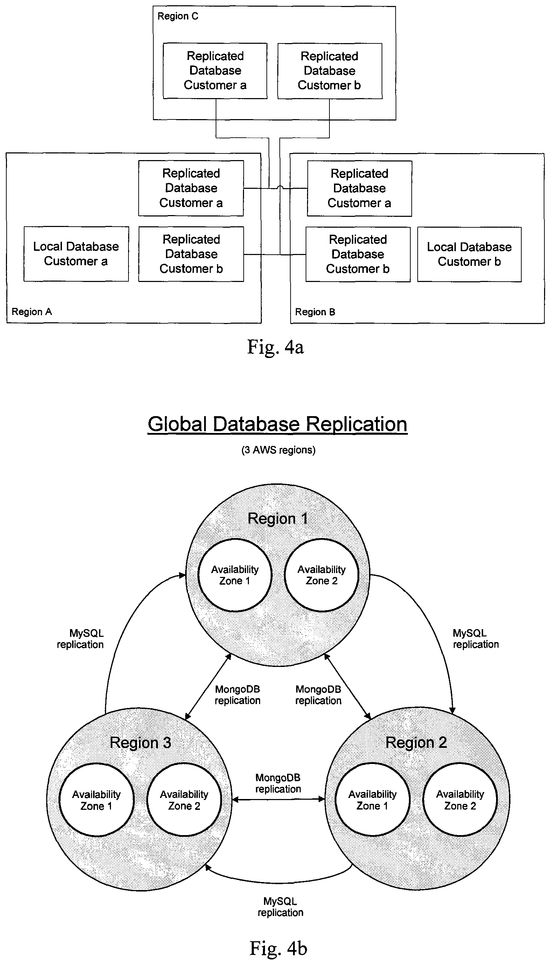

Fig. 4a shows an example of how the databases can be set up for three regions. Content provider a and content provider b each have a local database in region A and B respectively. Additionally, content provider a and b each have a replicated database that is replicated in the regions A, B and C. The replication works as a master-master replication, in each region it is possible to write to the database. Replication between the regions might be eventually consistent. Even when using different geographic distribution, all sections of the database are accessible via the same domain name and port number due to both a region aware DNS resolution and a database name space unification mechanism. Thereby, web applications can always use the same database configuration settings, regardless of where they are executed or how the data is replicated.

Next to manually specifying which data is stored in which regions (one region, several regions, all regions) by using different database names, that decision might also be taken automatically for data within a single database, using sharding. Either it can be configured to use the information in a certain data field of a certain table, e.g. "country" for a user data table, to decide where to store the data row (sharding) of that table. Alternatively, it can be analyzed statistically which data is most often accessed from which region. Data that is usually accessed from a specific region can then be moved to that region, saving storage space compared to globally replicated data.

Fig. 4b shows an example of how the replication for MySQL and MongoDB is configured using three regions with two availability zones each. The MySQL replication is set up as a ring, the MongoDB replication is set up as an all-to-all replication.

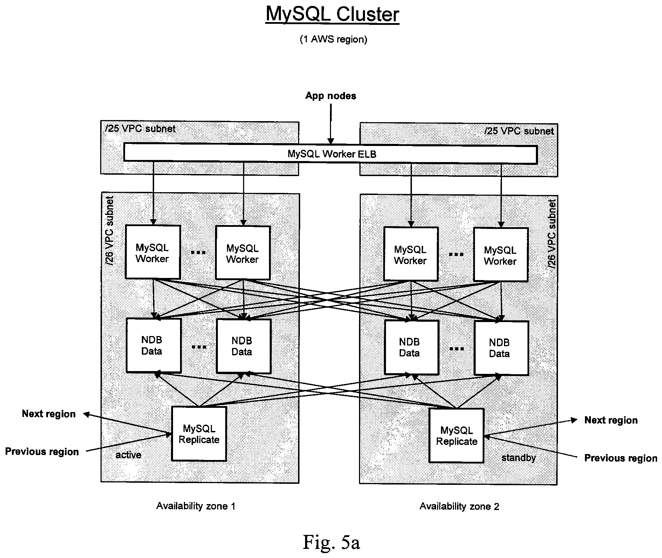

Fig. 5a shows an example of how the MySQL cluster can be configured within one region on two availability zones. A database load balancer distributes all database requests to a MySQL worker in one of the availability zones. Within each availability zone, there are a number of MySQL worker servers. These servers access data from a NDB data server in one of the availability zones; within each availability zone, there is a number of NDB database servers. Within each availability zone, there is a MySQL Replicate server that manages the replication to other regions. To scale up and down the database cluster, MySQL worker servers and/or NDB data servers can be added to or removed from the region.

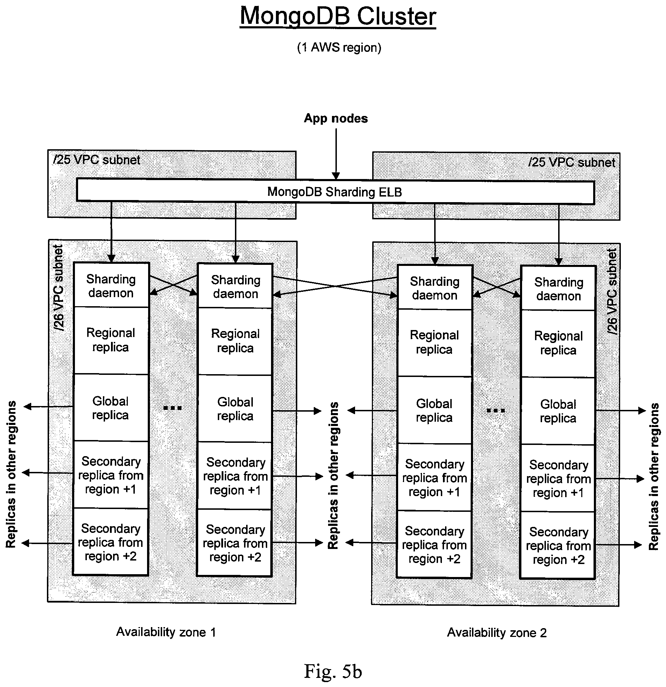

Fig. 5b shows an example of how the MongoDB cluster can be configured within one region on two availability zones. A database load balancer distributes all database requests to a MongoDB server. Within each availability zone, there are a number of MongoDB servers. Each Serves contains a sharding daemon, a regional replica, a global replica and a number of secondary replica from other regions. The sharding daemons are interconnected. The distributed replications replicate their data to other regions. Using this set-up, some databases can be stored locally, some can be distributed globally, and some can be distributed to specific regions only. To scale up and down the database cluster, MongoDB servers can be added to or removed from the region.

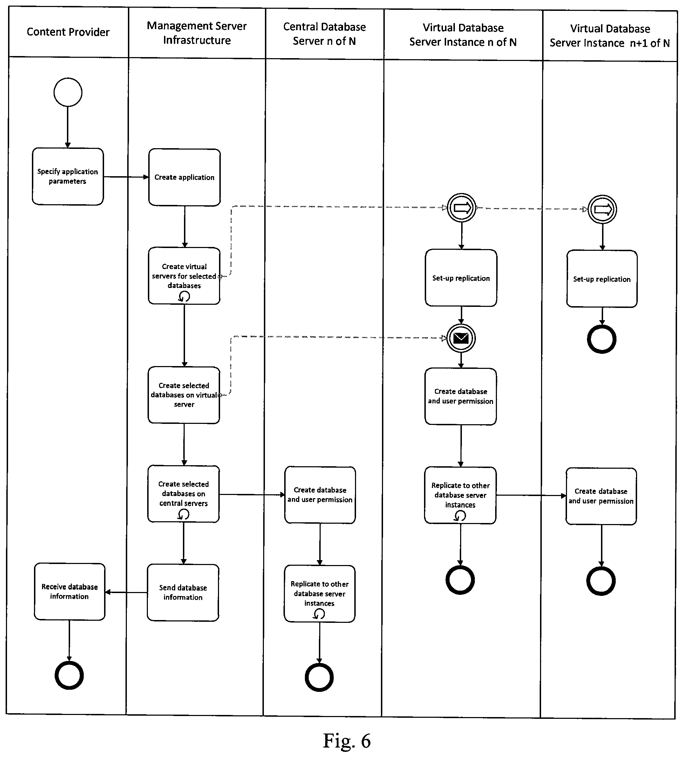

Fig. 6 shows the process of setting up a web application on the infrastructure. First, a content provider specifies the application parameters. The parameters can include the domain name, regions to deploy the application to, if the application should be set up to be highly available, the required execution environment (PHP, Python, Ruby etc.), the required databases (MySQL, PostgreSQL, MongoDB, Memcached etc.), the location of each database (only one region, distributed to certain regions, distributed globally) and the source code repository (e.g. GIT url and branch). The request is then sent to the management server infrastructure. There, the application is created according to the parameters specified.

If one of the required databases needs to be set up on virtual servers dedicated to the web application, instances of the database server image are started in all required regions and the replication between the virtual database server instances is set up. Then, the selected databases are created on the virtual database server instances. Next, in case databases that are hosted on central servers are selected, these databases are created on the central servers. In each case, the databases are set up to replicate to other instances and regions, therefore data creation operations might only be performed on one instance and then automatically replicated to the other instances. Finally, the database information is sent to the content provider.

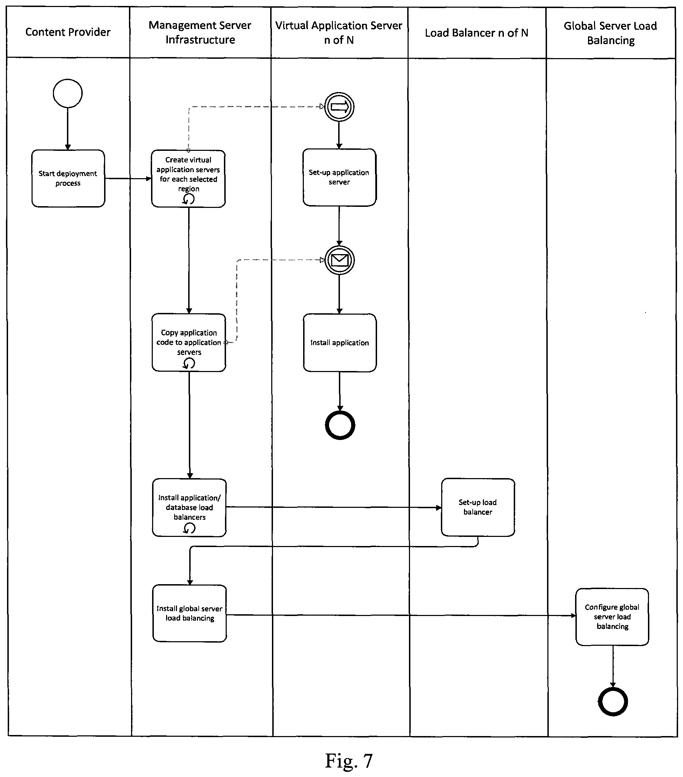

Fig. 7 shows the process of deploying a web application on the infrastructure. First, the content provider issues the request to deploy a web application. The management server infrastructure then creates the virtual application servers for each selected region. Once all virtual application servers are started, the application code is loaded from the content provider repository and copied onto all virtual application servers. Next, the application load balancer and the database load balancer in each region are configured according to the virtual server setup. Finally, global server load balancing is configured for the web application's domain to direct the end user to the appropriate application load balancer.

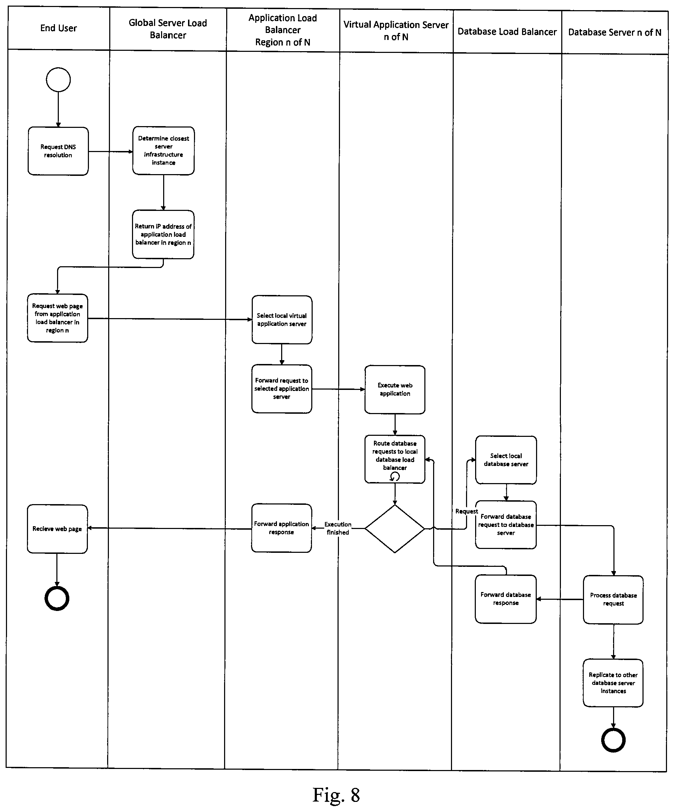

Fig. 8 shows the process of an end user accessing a web page hosted on the infrastructure. First, the end user sends a request for DNS resolution to the global server load balancer. For the given domain, the global server load balancer determines which application load balancer from which region the end user should be assigned to, e.g. based on proximity. The IP address of that application load balancer is returned to the end user. The end user then sends a request for a specific web page to that application load balancer. The application load balancer forwards the request a virtual application server from the same region. The virtual application server could be selected by a round-robin algorithm, by session stickiness or any other suitable algorithm. The virtual application server executes the web application logic and forwards all database requests to the respective database load balancer (depending on the database type) of the same region. The database load balancer selects a (depending on the type possibly virtual) database server and forwards the database request to that database server. The database server processes the database requests and returns the response to the database load balancer. The database load balancer forwards the response to the virtual application server. In parallel, if data was changed, the database replication mechanism might distribute the data to other database servers and other regions. Once the execution of the web application logic is finished, the application response is forwarded to the application load balancer and on to the end user.

The present invention has now been described with reference to several embodiments thereof. The foregoing detailed description and examples have been given for clarity of understanding only. No unnecessary limitations are to be understood therefrom. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims.

## Claims

1. Method for providing a web service at a plurality of edge networks distributed geographically, wherein the web service comprises a static module and a dynamic module, wherein each edge network comprises a plurality of edge database servers, a plurality of application servers and a load balancer, wherein the method comprises the steps of:
a) distributing the static module from a content provider network to the plurality of application servers,
b) redirecting a request of the web service from a user to one of the application servers hosting the static module by the load balancer,
c) redirecting the request of the web service to one of the edge database servers by the load balancer, and generating the dynamic module of the web service, wherein the plurality of edge database servers is adapted to generate the dynamic module of the web service,
d) delivering a web service reply to the user, the reply comprising the static module hosted by said one of the application servers and the dynamic module generated by said one of the edge database servers,
e1) automatically adding an additional application and/or edge database server when the load of the existing application and/or edge database server exceeds a first predetermined threshold, or
e2) automatically removing an existing application and/or edge database server when the load of the existing application and/or edge database server falls below a second predetermined threshold.

2. Method according to claim 1, wherein the load balancer comprises a database load balancer and an application load balancer,
wherein the request comprises application data request in HTTP or HTTPS which is redirected by the application load balancer, and
wherein the request comprises database request in TCP which is redirected by the database load balancer.

3. Method according to claim 2, wherein the method further comprises steps of:
c1) determining one of the edge networks for providing the web service , based on the geographical distances or network condition such as bandwidth or latency between the user and the edge networks,
c2) redirecting the request of the web service to the database load balancer of the determined edge network.

4. Method according to claim 3, wherein the method further comprises steps of:
c1a) resolving the IP address of the application load balancer and the database load balancer of the determined edge network; and/or
c2a) redirecting access to one of the edge database servers by the database load balancer using a database name space unification mechanism.

5. Method according to one of claims 2 to 4, wherein the plurality of the application servers and edge database servers are running on virtual machines, and the method further comprises the steps of: g) sending information including IP address of the added or removed application and/or edge database servers to a management server.

6. Method according to any one of preceding claims,
wherein the edge database servers within each edge network are kept in sync, and/or
wherein each edge network has one or more replicated database servers, and the replicated database servers within each edge network are kept in sync.

7. Method according to claim 6, wherein the edge database servers and/or the replicated database servers across the edge networks are kept in sync.

8. Method according to claim 6 to 7, wherein the replication of the replicated database server is either a master-master or a master-slave replication.

9. System for providing a web service with a static module and a dynamic module, wherein the system comprises a plurality of edge networks distributed geographically and adapted for providing the web service,
wherein each edge network comprises:
a plurality of application servers adapted to host the static module and to accept a request of the web service,
a plurality of edge database severs adapted to generate the dynamic module of the web service and to accept the request of the web service, and
a load balancer adapted for redirecting the request of the web service to one of the application servers and one of the edge database servers,
wherein the system is adapted to deliver a web service reply to a user requesting said web service, the reply comprising the static module hosted by said one of the application servers and the dynamic module generated by said one of the edge database servers, and is adapted to automatically add an additional application and/or edge database server when the load of the existing application and/or edge database servers exceeds a first predetermined threshold, or to automatically remove an existing application and/or edge database server when the load of the existing application and/or edge database server falls below a second predetermined threshold.

10. System according to claim 9,
wherein the request of the web service comprises an application data request in HTTP or HTTPS, and a database request in TCP,
wherein the load balancer comprises a database load balancer adapted to redirect the database request, and an application load balancer adapted to redirect the application data request.

11. System according to claim 10, wherein the system is adapted to:
determine one of the edge networks for providing the web service, based on the geographical distances or network condition such as bandwidth or latency between the user and the edge networks, and
redirect the request of the web service to the database load balancer of the determined edge network.

12. System according to claim 11, the system is adapted to:
resolve the IP address of the application load balancer and the database load balancer of the determined edge network; and/or
redirect access to one of the edge database servers by the database load balancer using a database name space unification mechanism.

13. System according to any one of claims 9 to 12, wherein the plurality of the application servers and edge database servers are running on virtual machines, and the system means for sending information including IP address of the added or removed application and/or edge database servers to a management server.

14. System according to any one of claims 9 to 13,
wherein each the edge database servers within each edge network are kept in sync, and/or
wherein each edge networks has one or more replicated database servers, the replicated database servers within each edge network are kept in sync, and the replication of the replicated database servers is either a master-master or a master-slave replication.

15. System according to claim 14, wherein the edge database servers and/or the replicated database servers across the edge networks are kept in sync.

## Patentansprüche

1. Verfahren zur Bereitstellung eines Webdienstes an mehreren Edge-Netzwerken, die geographisch verteilt sind, wobei der Webdienst ein statisches Modul und ein dynamisches Modul aufweist, wobei jedes Edge-Netzwerk mehrere Edge-Datenbankserver, mehrere Anwendungsserver und einen Lastverteiler aufweist, wobei das Verfahren die folgenden Schritte aufweist:
a) Verteilen des statischen Moduls von einem Inhalteanbieternetzwerk an die mehreren Anwendungsserver,
b) Umleiten einer Anforderung eines Webdienstes von einem Benutzer an einen der Anwendungsserver, der das statische Modul hosted, durch den Lastverteiler,
c) Umleiten der Anforderung des Webdienstes an einen der Edge-Datenbankserver durch den Lastverteiler und Erzeugen des dynamischen Moduls des Webdienstes, wobei die mehreren Edge-Datenbankserver geeignet sind, das dynamische Modul des Webdienstes zu erzeugen,
d) Liefern einer Webdienstantwort an den Benutzer, wobei die Antwort das statische Modul, das von dem einen der Anwendungsserver gehostet wird, und das dynamische Modul, das von dem einen der Edge-Datenbankserver erzeugt wird, aufweist,
e1) automatisches Hinzufügen eines zusätzlichen Anwendungs- und/oder Edge-Datenbankservers, wenn die Last des vorhandenen Anwendungs- und/oder des Edge-Datenbankservers eine erste vorgegebene Schwelle überschreitet, oder
e2) automatisches Entfernen eines vorhandenen Anwendungs- und/oder Edge-Datenbankservers, wenn die Last des vorhandenen Anwendungs- und/oder Edge-Datenbankservers unter eine zweite vorgegebene Schwelle fällt.

2. Verfahren nach Anspruch 1, wobei der Lastverteiler einen Datenbanklastverteiler und einen Anwendungslastverteiler aufweist,
wobei die Anforderung eine Anwendungsdatenanforderung in HTTP oder HTTPS aufweist, die von dem Anwendungslastverteiler umgeleitet wird, und
wobei die Anforderung eine Datenbankanforderung in TCP aufweist, die von dem Datenbanklastverteiler umgeleitet wird.

3. Verfahren nach Anspruch 2, wobei das Verfahren ferner die folgenden Schritte aufweist:
c1) Bestimmen eines der Edge-Netzwerke zur Bereitstellung des Webdienstes basierend auf den geographischen Entfernungen oder den Netzwerkbedingungen, wie etwa der Bandbreite oder Latenz zwischen dem Benutzer und den Edge-Netzwerken,
c2) Umleiten der Anforderung des Webdienstes an den Datenbanklastverteiler des bestimmten Edge-Netzwerks.

4. Verfahren nach Anspruch 3, wobei das Verfahren ferner die folgenden Schritte aufweist:
c1a) Auflösen der IP-Adresse des Anwendungslastverteilers und des Datenbanklastverteilers des bestimmten Edge-Netzwerks; und/oder
c2a) Umleiten des Zugriffs auf einen der Edge-Datenbankserver durch den Datenbanklastverteiler unter Verwendung eines Datenbanknamensraum-Vereinheitlichungsmechanismus.

5. Verfahren nach einem der Ansprüche 2 bis 4, wobei die mehreren Anwendungsserver und Edge-Datenbankserver auf virtuellen Maschinen laufen und das Verfahren ferner die folgenden Schritte aufweist: g) Senden von Informationen einschließlich der IP-Adresse der zugefügten oder entfernten Anwendungs- und/oder Edge-Datenbankserver an einen Verwaltungsserver.

6. Verfahren nach einem der vorhergehenden Ansprüche,
wobei die Edge-Datenbankserver innerhalb jedes Edge-Netzwerks synchron gehalten werden, und/oder
wobei jedes Edge-Netzwerk einen oder mehrere replizierte Datenbankserver hat, und die replizierten Datenbankserver innerhalb jedes Edge-Netzwerks synchron gehalten werden.

7. Verfahren nach Anspruch 6, wobei die Edge-Datenbankserver und/oder die replizierten Datenbankserver über die Edge-Netzwerke synchron gehalten werden.

8. Verfahren nach Anspruch 6 bis 7, wobei die Replikation des replizierten Datenbankservers entweder eine Master-Master- oder eine Master-Slave-Replikation ist.

9. System zur Bereitstellung eines Webdienstes mit einem statischen Modul und einem dynamischen Modul, wobei das System mehrere Edge-Netzwerke aufweist, die geographisch verteilt sind und geeignet sind, den Webdienst bereitzustellen,
wobei jedes Edge-Netzwerk aufweist:
mehrere Anwendungsserver, die geeignet sind, das statische Modul zu hosten und eine Anforderung des Webdienstes anzunehmen,
mehrere Edge-Datenbankserver, die geeignet sind, das dynamische Modul des Webdienstes zu hosten und die Anforderung des Webdienstes anzunehmen, und
einen Lastverteiler, der geeignet ist, die Anforderung des Webdienstes an einen der Anwendungsserver und einen der Edge-Datenbankserver umzuleiten,
wobei das System geeignet ist, eine Webdienstantwort an einen Benutzer, der den Webdienst anfordert, zu liefern, wobei die Antwort das statische Modul, das von dem einen der Anwendungsserver gehostet wird, und das dynamische Modul, das von dem einen der Edge-Datenbankserver erzeugt wird, aufweist und geeignet ist, einen zusätzlichen Anwendungs- und/oder eines Edge-Datenbankserver automatisch hinzuzufügen, wenn die Last des vorhandenen Anwendungs- und/oder des Edge-Datenbankservers eine erste vorgegebene Schwelle überschreitet, oder einen vorhandenen Anwendungs- und/oder Edge-Datenbankserver automatisch zu entfernen, wenn die Last des vorhandenen Anwendungs- und/oder Edge-Datenbankservers unter eine zweite vorgegebene Schwelle fällt.

10. System nach Anspruch 9,
wobei der Webdienst eine Anwendungsdatenanforderung in HTTP oder HTTPS und eine Datenbankanforderung in TCP aufweist,
wobei der Lastverteiler einen Datenbanklastverteiler, der geeignet ist, die Datenbankanforderung umzuleiten, und einen Anwendungslastverteiler, der geeignet ist, die Anwendungsdatenanforderung umzuleiten, aufweist.

11. System nach Anspruch 10, wobei das System geeignet ist, um:
eines der Edge-Netzwerke zur Bereitstellung des Webdienstes basierend auf den geographischen Entfernungen oder den Netzwerkbedingungen, wie etwa der Bandbreite oder Latenz zwischen dem Benutzer und den Edge-Netzwerken, zu bestimmen, und
die Anforderung des Webdienstes an den Datenbanklastverteiler des bestimmten Edge-Netzwerks umzuleiten.

12. System nach Anspruch 11, wobei das System geeignet ist, um:
die IP-Adresse des Anwendungslastverteilers und des Datenbanklastverteilers des bestimmten Edge-Netzwerks aufzulösen; und/oder
den Zugriff auf einen der Edge-Datenbankserver unter Verwendung eines Datenbanknamensraum-Vereinheitlichungsmechanismus durch den Datenbanklastverteiler umzuleiten.

13. System nach einem der Ansprüche 9 bis 12, wobei die mehreren Anwendungsserver und Edge-Datenbankserver auf virtuellen Maschinen laufen und das System Mittel zum Senden von Informationen einschließlich der IP-Adresse der zugefügten oder entfernten Anwendungs- und/oder Edge-Datenbankserver an einen Verwaltungsserver aufweist.

14. System nach einem der Ansprüche 9 bis 13,
wobei jeder Edge-Datenbankserver innerhalb jedes Edge-Netzwerks synchron gehalten werden, und/oder
wobei jedes Edge-Netzwerk einen oder mehrere replizierte Datenbankserver hat, die replizierten Datenbankserver innerhalb jedes Edge-Netzwerks synchron gehalten werden und die Replikation der replizierten Datenbankserver entweder eine Master-Master- oder eine Master-Slave-Replikation ist.

15. System nach Anspruch 14, wobei die Edge-Datenbankserver und/oder die replizierten Datenbankserver über die Edge-Netzwerke synchron gehalten werden.

## Revendications

1. Procédé de fourniture d'un service Web sur une pluralité de réseaux périphériques répartis géographiquement, dans lequel le service Web comprend un module statique et un module dynamique, dans lequel chaque réseau périphérique comprenant une pluralité de serveurs de base de données périphériques, une pluralité de serveurs d'application et un équilibreur de charge, dans lequel le procédé comprend les étapes consistant à :
a) distribuer le module statique à partir d'un réseau de fournisseur de contenu à la pluralité de serveurs d'application,
b) rediriger une requête du service Web d'un utilisateur vers l'un des serveurs d'application hébergeant le module statique par l'équilibreur de charge,
c) rediriger la requête du service Web vers l'un des serveurs de base de données périphériques par l'équilibreur de charge, et générer le module dynamique du service Web,
dans lequel la pluralité de serveurs de base de données périphériques est adaptée pour générer le module dynamique du service Web,
d) délivrer une réponse de service Web à l'utilisateur, la réponse comprenant le module statique hébergé par ledit un des serveurs d'application et le module dynamique généré par ledit un des serveurs de base de données périphériques,
e1) ajouter automatiquement un serveur d'application et/ou de base de données périphérique supplémentaire lorsque la charge du serveur d'application et/ou de base de données périphérique existant dépasse un premier seuil prédéterminé, ou
e2) supprimer automatiquement un serveur d'application et/ou de base de données périphérique existant lorsque la charge du serveur d'application et/ou de base de données périphérique existant tombe en dessous d'un second seuil prédéterminé.

2. Procédé selon la revendication 1, dans lequel l'équilibreur de charge comprend un équilibreur de charge de base de données et un équilibreur de charge d'application,
dans lequel la requête comprend une requête de données d'application en HTTP ou HTTPS qui est redirigée par l'équilibreur de charge d'application, et
dans lequel la requête comprend une requête de base de données en TCP qui est redirigé par l'équilibreur de charge de base de données.

3. Procédé selon la revendication 2, dans lequel le procédé comprend en outre les étapes consistant à :
c1) déterminer l'un des réseaux périphériques pour fournir le service Web, en fonction des distances géographiques ou des conditions de réseau telles que la bande passante ou la latence entre l'utilisateur et les réseaux périphériques,
c2) rediriger la requête du service Web vers l'équilibreur de charge de base de données du réseau périphérique déterminé.

4. Procédé selon la revendication 3, dans lequel le procédé comprend en outre les étapes consistant à :
c1a) résoudre l'adresse IP de l'équilibreur de charge d'application et de l'équilibreur de charge de base de données du réseau périphérique déterminé ; et/ou
c2a) rediriger l'accès à l'un des serveurs de base de données périphériques par l'équilibreur de charge de base de données en utilisant un mécanisme d'unification d'espace de nom de base de données.

5. Procédé selon l'une des revendications 2 à 4, dans lequel la pluralité des serveurs d'application et des serveurs de base de données périphériques s'exécutent sur des machines virtuelles, et le procédé comprend en outre les étapes consistant à :
g) envoyer des informations comprenant l'adresse IP du serveur d'application et/ou de base de données périphérique ajouté ou supprimé vers un serveur de gestion.

6. Procédé selon l'une quelconque des revendications précédentes,
dans lequel les serveurs de base de données périphériques dans chaque réseau périphérique sont maintenus synchronisés et/ou
dans lequel chaque réseau périphérique possède un ou plusieurs serveurs de base de données répliqués, et les serveurs de base de données répliqués au sein de chaque réseau périphérique sont maintenus synchronisés.

7. Procédé selon la revendication 6, dans lequel les serveurs de base de données périphériques et/ou les serveurs de base de données répliqués sur les réseaux périphériques sont maintenus synchronisés.

8. Procédé selon les revendications 6 à 7, dans lequel la réplication du serveur de base de données répliqué est soit une réplication maître-maître soit une réplication maître-esclave.

9. Système pour fournir un service Web avec un module statique et un module dynamique, dans lequel le système comprend une pluralité de réseaux périphériques répartis géographiquement et adaptés pour fournir le service Web,
dans lequel chaque réseau périphérique comprend :
une pluralité de serveurs d'application adaptés pour héberger le module statique et pour accepter une requête du service Web,
une pluralité de serveurs de base de données périphériques adaptés pour générer le module dynamique du service Web et pour accepter la requête du service Web, et
un équilibreur de charge adapté pour rediriger la requête du service Web à l'un des serveurs d'application et à l'un des serveurs de base de données périphériques,
dans lequel le système est adapté pour fournir une réponse de service Web à un utilisateur requérant ledit service Web, la réponse comprenant le module statique hébergé par ledit un des serveurs d'application et le module dynamique généré par ledit un des serveurs de base de données périphériques, et est adapté pour ajouter automatiquement un serveur d'application et/ou de base de données périphérique supplémentaire lorsque la charge du serveur d'application et/ou de base de données périphérique existant dépasse un premier seuil prédéterminé, ou pour supprimer automatiquement un serveur d'application et/ou de base de données périphérique existant lorsque la charge du serveur d'application et/ou de base de données périphérique existant tombe en dessous d'un second seuil prédéterminé.

10. Système selon la revendication 9,
dans lequel la requête du service Web comprend une requête de données d'application en HTTP ou HTTPS, et une requête de base de données en TCP,
dans lequel l'équilibreur de charge comprend un équilibreur de charge de base de données adapté pour rediriger la requête de base de données; et un équilibreur de charge d'application adapté pour rediriger la requête de données d'application.

11. Système selon la revendication 10, dans lequel le système est adapté pour :
déterminer l'un des réseaux périphériques pour fournir le service Web, en fonction des distances géographiques ou des conditions de réseau telles que la bande passante ou la latence entre l'utilisateur et les réseaux périphériques, et
rediriger la requête du service Web à l'équilibreur de charge de base de données du réseau périphérique déterminé.

12. Système selon la revendication 11, le système est adapté pour :
résoudre l'adresse IP de l'équilibreur de charge d'application et de l'équilibreur de charge de base de données du réseau périphérique déterminé ; et/ou
rediriger l'accès à l'un des serveurs de base de données périphériques par l'équilibreur de charge de base de données en utilisant un mécanisme d'unification d'espace de nom de base de données.

13. Système selon l'une quelconque des revendications 9 à 12, dans lequel la pluralité de serveurs d'application et de serveurs de base de données périphériques s'exécutent sur des machines virtuelles, et le système permet d'envoyer des informations comprenant des adresses IP du serveur d'application et/ou de base de données périphérique ajouté ou supprimé vers un serveur de gestion.

14. Système selon l'une quelconque des revendications 9 à 13,
dans lequel chaque serveur de base de données périphérique dans chaque réseau périphérique est maintenu synchronisé et/ou
dans lequel chaque réseau périphérique comporte un ou plusieurs serveurs de base de données répliqués, les serveurs de base de données répliqués dans chaque réseau périphérique sont maintenus synchronisés, et la réplication des serveurs de base de données répliqués est soit une réplication maître-maître soit une réplication maître-esclave.

15. Système selon la revendication 14, dans lequel les serveurs de base de données périphériques et/ou les serveurs de base de données répliqués sur les réseaux périphériques sont maintenus synchronisés.
